# EUROPEAN PATENT SPECIFICATION

(11) **EP 0 460 729 B1**
(45) Date of publication and mention of the grant of the patent: **09.11.1994**
(21) Application number: 91201187.1
(22) Date of filing: 17.05.1991
(51) Int. Cl.: H02B 1/044

(54) **Plugged fastening device with snap-action locking for control and/or signalling units**
Verstopfte Befestigungsvorrichtung mit Schnappverriegelung für Befehls- und/oder Meldeinheiten
Dispositif de fixation obturable avec verrouillage à action brusque pour unités de commande et/ou de signalisation

(30) Priority: 29.05.1990 IT 2126790 U
(43) Date of publication of application: 11.12.1991
(73) Proprietor: CGE- COMPAGNIA GENERALE ELETTROMECCANICA S.p.A., I-20144 Milan (IT)
(72) Inventor: Falchi, Fiorino, I-10090 Sangano (Torino) (IT)
(74) Representative: Dragotti, Gianfranco

(56) References cited:
- EP-A- 0 105 387
- FR-A- 2 207 403
- US-A- 3 614 712

## Description

The present invention relates to a plugged fastening device, on a board mountable hand activates key or operator, of control and/or signalling units (for example switching and signalling devices) provided with snap-action locking means disengageable through the action of a common tool, such as a screwdriver.

Since long time board mountable operators containing push-buttons and control levers, as well as signalling means, such as lamps, are well known.

Among them are specifically known and largely used those disclosed and claimed in the European granted Patents No. 0,105,387 and 0,199,344 at the name of the Applicant of the present Application, to which reference is made. Those operators are of the kind having fastening means located rear the board comprising a first external member protruding from a board into which is bayonett inserted, from the back of the board, a second member provided with fastening ring nut cooperating to fasten the operator to the board so that it is impossible to unscrew the same by operating from the external side of the board. The second member, located rear the board can receive a plugged flange at which may be mounted control and/or signalling units which, according to the European Patent No. 0,105,387, are fastened by means of screws engageable in threaded holes in the flange and, according to the European Patent No. 0,199,344 are axially inserted on inside protruding fingers of the flange itself.

Also, in the prior art is well known a device, for example disclosed and claimed in FR-A-2.207.403, in which a frontal member, to be fastened to a board, is both engaged and disengaged by a fastening member comprising a cage provided with a lever movable in rotation by means of a proper tool, as for example a screwdriver, engaged in a window of said lever for both assembly and disassembly operations of the cage from and to said frontal member, being some control and/or signalling units fastened to the cage by means of screws engaged in threaded holes crossing the cage itself.

Further it is to observe that both the assembly and disassembly operations of the device covered by FR-A-2.207.403 need the intervention of a proper tool, so that the assembly operation is not immediately feasible by simple insertion of the fastening member on the frontal member, rendering not very practical such a device.

The above mentioned operators work rather well, but are suited just to large size and high price push-button assembleas mountable only in relatively large and high cost control boards where both the large size and the high cost can be justified.

Then, it remains the problem for embodying less size and cost operators to be used in smaller and relatively minor cost control boards having however the feature to be rear board fastenable and bear control and/or signalling units fast mountable on the operators themselves.

It is an object of the present invention to embody such a kind of operators.

It is a more specific object of the present invention to embody an operator insertable from the front side into the hole of a board and fastenable by means of a ring nut on the rear side of the board.

It is another object is to provide such a kind of operator which houses thereon mountable control and/or signalling units.

These and other objects are met by the present invention, consisting of an operator insertable from the front external side of a board, but rearside fastenable through, for example, a ring nut screwable on a trheaded hollow stem protruding from the operator to the inside of the board, said stem being provided on the internal side with respect to the board with at least one longitudinal slot, having a bevelled protrusion followed by a substantially perpendicular recess, suitable to house inserted and retain in engagement at least one relief protruding from a central bore or hollow passage of a ring-shaped lever housed in a flange and characterized in that said ring-shaped lever is resiliently movable around a longitudinal axis of said stem, said at least one relief being disengageable by rotation of said ring-shaped lever and said flange being provided in a position opposed with respect to that of insertion of said stem with seats to house one or more fast mating (snap insertable) control and/or signalling units.

Specifically, said slot and relief plurality consists of two slots and two reliefs.

Also specifically, said slot and relief plurality consists of three slots and three reliefs.

Still specifically, said slot and relief plurality consists of four slots and four reliefs.

Preferably, the reliefs of said plurality, engageable in said slots, are provided as inside protruding in a hollow passage, conformed as said stem, being said lever arranged in a first position by resilient means and being able to be arranged on will in a second position through manual operation with the help of a tool, such as a screwdriver.

Also more preferably, the flange housing said lever is provided with a hollow passage, comformed as the passage pierced through the lever, inside provided with so many protrusions as many are the protruding teeth of the lever entering the corresponding slots in the stem to operate as a guide for said flange with respect to said stem.

Specifically, the reliefs protruding form the passage of the lever do not coincide in position with the reliefs in the passage of the flange, therewith coinciding under the action of the bevelled reliefs of said slots in the operator stem and coming back to the not coinciding starting position when, having overcome said bevelled reliefs, enter the subsequent recesses.

Still specifically, said flange is provided, in a position opposed to that of insertion on this stem, with seats to plug-house control and/or signalling units.

More specifically, said seats consist of seats peripherically arranged about said flange and provided on the bottom with at least a tooth engaging fins laterally protruding from members containing said control and/or signalling units.

In a most preferred embodiment of the present invention the peripheral flange slots are in number of three pairs to house three members, at most, of said control and/or signalling units.

The features and the advantages of the present invention have been hereabove defined, however, other features and advantages will be explained by the following detailed description of an embodiment, not to be altogether construed in a limiting way, to be red with the enclosed drawing, wherein:
- Fig. 1 is an exploded side view, partially in cross section, of a fastening device according to the present invention;
- Fig. 2 is a partial sectional view of a flange according to the present invention showing the resilient component operating the lever for engaging the reliefs with the slots in the stem of the operator;
- Fig. 3 is a partial perspective view showing an operator stem according to the present invention;
- Fig. 4 is a perspective view of the flange and of a member of control and/or signalling unit according to the present invention depicting the way to fast (snap) insert said unit members in said flange.

Referring to the figures, it is seen that a fastening device according to the present invention consists of a hand activated key or operator 10 comprising an enlarged head 12 followed by a cylindrical stem 14 comprised of a first threaded portion 16 followed by a smooth portion 18 from which terminal end starts to the inside a plurality of slots 20a-d, arranged in axial direction everyone provided with a protrusion 22a-d followed by a recess 24a-d having a hereafter specified task. Said slots 20a-d are partially closed inside the stem 14 by a ferrule 25 having the task of supporting and guiding thereinto entering reliefs or teeth. Between the enlarged head 12 and the cylindric stem 14 can be interposed a tooth 26 engageable in a corresponding notch 28 in the circumferential edge 28 of a circular hole 30 through a board 32 on which can be fastened the operator 10. Between the enlarged head 12 and the board 32 can be interposed a gasket 34 which is pressed between said head 12, the board 32 and a rim 36 near the threaded portion 16 in order to assure a liquid seal between the operator 10 and the board 32. At last, an internally threaded ring nut 38 fastens the operator 10 to the board 32.

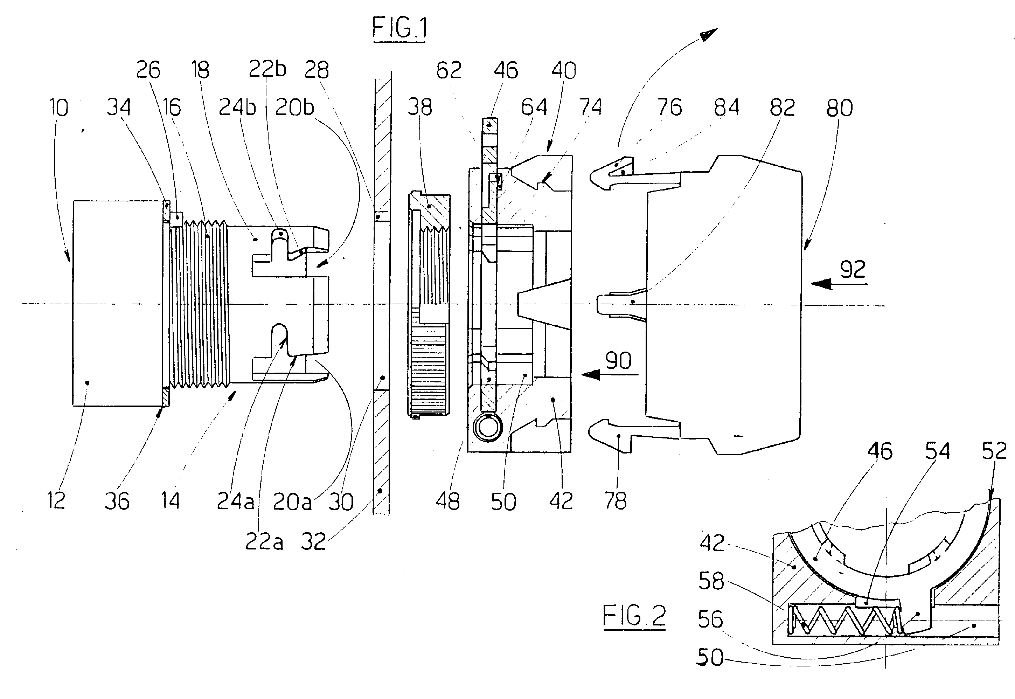

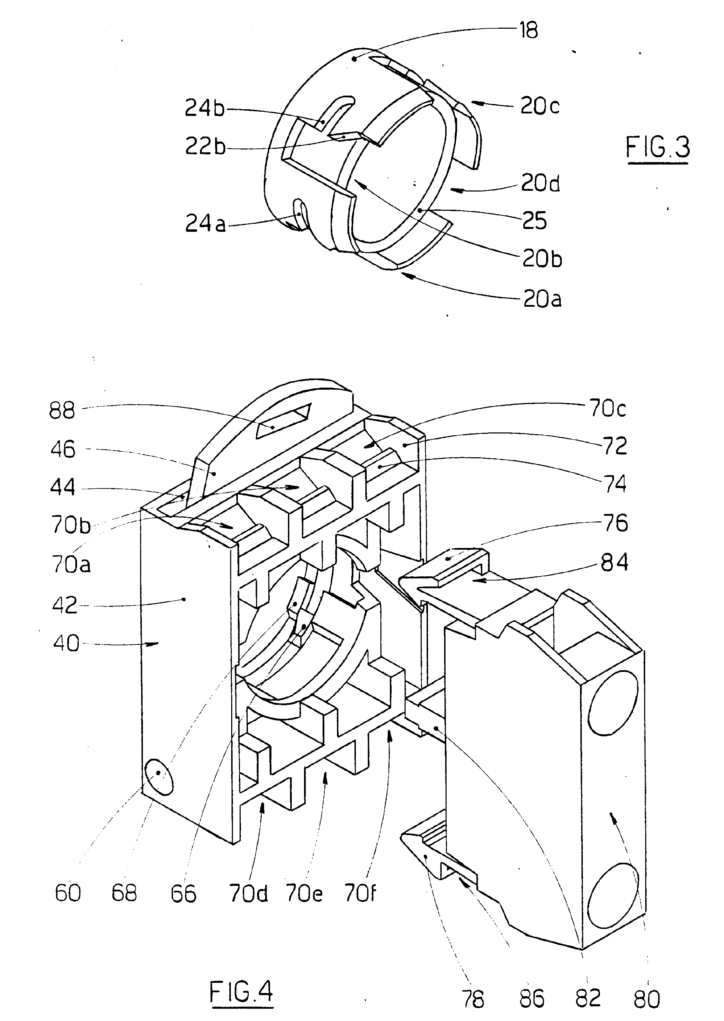

On the smooth portion 18 of the cylindric stem 14 is inserted a flange 40 consisting of a hollow body 42 which houses in a transversal slot 44 a lever 46 provided with a circular central bore 48, coextensive with a similar circular bore 50 in the body 42 of the flange 40, suitable to house the smooth portion 18 of the stem 14. The lever 46 housed in the slot 44 abuts against a semicircular sole 52 thereof enjoying then the possibility of rotating around the common axis of the circular bore 48 and 50 and of the operator stem 14. The semicircular sole 52 is provided with a slot 54 through which protrudes a finger 56 of said lever 46 in the position depicted in the figures 2 and 4. The lever 46 itself is provided on the upper side with a tang 62, having a small tooth engaging a slot 64 in which may freely enter at the entering of the lever 46 into the slot 44 and then does not come out any more, assuring the proper arrangement of the lever 46 in the body 42 of the flange 40.

The circular bore 48 of the lever 46 is provided with reliefs, such as the inside protruding relief 66, , and also the circular bore 50 of the flange body 42 is provided on the internal edge with reliefs, such as the inside protruding relief 68, entering said reliefs in corresponding slots 20a-d of the cylindric stem 14 of the operator 10.

The flange 40 is rear provided with seats, in the form of side slots 70a-f, each other separated by walls, such as the lateral wall 72, and provided on the bottom with teeth, such as the tooth 74, to engage fins 76 and 78 protruding from a member 80 containing both control and signalling units. In the figures 1 and 4 the depicted member 80 is a control (switch) unit provided with an actuating stem 82 which is engaged by a mechanism coming out from the operator 10. Of course, the members of the control and/or signalling units can be more than one, for example three in number to engage the respective lateral slot pairs 70a and 70d, 70b and 70e, 70c and 70f.

The fins 76 and 78 are provided with respective slots 84 and 86 having disengaging purposes therefor, as herebelow depicted in the description of the invention operation. Also the lever 46 of the flange 40 is provided with a window 88 to receive a tool, such as a screwdriver, for disengaging the reliefs 66 thereof, as herebelow depicted.

The operation of the invention is the following one:
when a push-button assembly, of the kind depicted in the figures, is desired to be mounted, an operator 10 is introduced into a hole 30 of a board 32 for having the enlarged head 12 abutting against the board 32, possibly introducing the tooth 26 in the notch 28 of the hole 30 itself. The ring nut 38 is then inserted on the cylindric stem 14 for complete screwing on the first threaded portion 16, fastening the operator 10 to the board 32. Having the operator so fastened, it is possible to insert the flange 40 on the smooth portion 18 of the cylindric stem 14, moving it in the direction of the arrow 90, orienting the body 42 of the flange 40 so that the flange reliefs 68 enter the slots 20a-d of the stem 14 grazing their straight sides and finding the way to reach the bottom of said slots. In turn, the reliefs or teeth 66 in the circular opening 48 of the lever 46 meet, entering the slots 20a-d, the bevelled reliefs 22a-d which thrust them, making the lever 46 to rotate in such a way that the finger 56 overcomes the force of the spring 58, which then, once the reliefs have got over the bevelled reliefs 22a-d, thrust the same into the recesses 24a-d assuring a plug fastening of the flange 40 on the operator 10. Once the flange 40 has been fastened to the operator 10, it can house one or more inserted members 80 of control and /or signalling units which are approached in the direction of the arrow 92 till the fins 76 and 78 pass with their internal teeth over the teeth 74 in the lateral slots 70a-c of the flange 40, so assuring a complete anchoring of the member 80 to the flange 40.

Of course, the mounting operation of the members 80 on the flange 40 can be carried out before inserting the flange 40 on the stem 14 of the operator 10 without however come out of the scope of the invention.

To disassemble and disinsert the members 80 from the flange 40 and the flange 40 from the operator 10, it is possible to proceed in the following way:
one of the fins 76 or 78 is lifted by introducing a screwdriver in one of their slots 84 or 86. Once one of this fins has been lifted , the member 80 comes off from the flange 40. Then a screwdriver is inserted in the window 88 of the lever 46, making it anticlockwise rotate, so that the lever reliefs 66 aligne with the flange reliefs 68, thus clearing said reliefs 66 from the rececces 24a-d of the slots 20a-d and making possible to extract the flange 40 from the operator 10. Of course, the operation can be inverted, if the size of the members 80 allows the insertion of the screwdriver in the window 88, extracting first the flange 40 from the operator 10 and then separating the members 80 from the flange 40.

## Claims

1. Plugged fastening device with snap-action lock consisting of an operator (10) insertable from the front external side of a board (32), but rearside fastenable by means , for example, a threaded ring nut (38) screwed on a threaded hollow stem (14) protruding from the operator (10) to the inside of the board (32), said stem (14) being provided on the internal side with at least one longitudinal slot (20), having a bevelled protrusion (22), followed by a substantially perpendicular recess (24), suitable to house inserted and retain in engagement at least one relief (66) protruding from a central bore or hollow passage (48) of a ring-shaped lever (46) housed in a flange (40) and characterized in that said ring-shaped lever (46) is resiliently movable around a longitudinal axis of the stem (14), said at least one relief (66) being disengageable by rotation of said ring-shaped lever (46) through wanted intervention thereon and said flange (40) being provided in a position opposed with respect to that of insertion of said stem (14), with seats (70a-f) to house one or more fast mating (snap insertable) control and/or signalling units (80).

2. Plugged fastening device, as in claim 1, characterized in that said stem (14) is provided on the internal side with a plurality of slots (20a-d) housing in plugged manner and retaining in engagement a corresponding plurality of movable reliefs (66) inside protruding from the ring-shaped lever (46).

3. Plugged fastening device, as in claim 2, characterized in that said plurality of slots (20a-d) and reliefs (66) consits of two slots and two reliefs.

4. Plugged fastenig device, as in claim 2, characterized in that said plurality of slots (20a-d) and reliefs (66) consists of three slots and three reliefs.

5. Plugged fastenig device, as in claim 2, characterized in that said plurality of slots (20a-d) and reliefs (66) consists of four slots and four reliefs.

6. Plugged fastening device, as in claim 1, characterized in that the reliefs (66) of said plurality, engageable in said slots (20a-d), are embodied as inside protruding in the hollow passage (48), conformed as said stem (14), through the lever (46), incorporated in said flange (40) and rotatable around an axis of said stem (14), being said lever (46) arranged in a first position by resilient means (58) and being arrangeable on will in a second position by means of manual intervention with the help of a tool, such as a screwdriver.

7. Plugged fastening device, as in claim 6, characterized in that the flange (40) housing said lever (46) is provided with a hollow passage (50), comformed as the passage (48) through the lever (46), internally provided with so many reliefs (68) as many are the reliefs (66), protruding in said passage (48) of the lever (46) adapted to be inserted into the corresponding slots (20a-d) in the stem (14) to operate as a guide of said flange (40) with respect to said stem (14).

8. Plugged fastening device, as in claim 7, characterized in that the reliefs (66) protruding from the passage (48) of the lever (46) do not coincide in position with the reliefs (68) protruding from the passage (50) of the flange (40), going to coincide therewith under the operation of the bevelled reliefs (22a-d) present in said slots (20a-d) in the operator stem (14) and coming back in the not coinciding starting position when, having overcome said bevelled reliefs (22a-d), enter the subsequent recesses (24a-d).

9. Plugged fastening device, as in claim 8, characterized in that said seats consist of slots (70a-f), peripherically arranged about said flange (40) and provided on the bottom with at least a tooth (74) adapted to engage fins (76, 78) laterally protruding from members containing said control and/or signalling units (80).

10. Plugged fastening device, as in claim 9, characterized in that the peripheric slots (70a-f) of the flange (40) are three pairs in number to house at most three members of said control and/or signalling units (80).

## Patentansprüche

1. Steckbare Befestigungsvorrichtung mit Schnapp-Verriegelung, bestehend aus einer Bedienungseinrichtung (10), die von der vorderen Außenseite von einer Platte (32) einsetzbar ist, aber von der Rückseite befestigt werden kann, beispielsweise durch eine Gewinderingmutter (38), die auf einen hohlen, mit Gewinde versehenen Schaft (14) geschraubt wird, der von der Bedienungseinrichtung (10) zur Innenseite der Platte (32) vorsteht, wobei der Schaft (14) auf der Innenseite mit wenigstens einem Längsschlitz (20) versehen ist und einen abgeschrägten Vorsprung (22) aufweist, wonach eine im wesentlichen senkrechte Aussparung (24) folgt, die zur Aufnahme wenigstens einer eingesetzten und in Eingriff gehaltenen Erhebung (66) geeignet ist, die von einer Mittelbohrung oder einem hohlen Durchgang (48) eines ringförmigen Hebels (46) vorsteht, der in einem Flansch (40) aufgenommen ist, dadurch gekennzeichnet, daß der ringförmige Hebel (46) um eine Längsachse des Schaftes (14) federnd bewegbar ist, die wenigstens eine Erhebung (66) durch Drehung des ringförmigen Hebels (46) durch gewünschten Eingriff lösbar ist und der Flansch (40) in einer Position entgegengesetzt in Bezug auf diejenige beim Einsetzen des Schaftes (14) mit Sitzen (70 a-f) versehen ist, um eine oder mehrere fest passende (durch Schnappen einsetzbare) Steuer- und/oder Signaleinheiten (80) aufzunehmen.

2. Steckbare Befestigungsvorrichtung nach Anspruch 1, dadurch gekennzeichnet, daß der Schaft (14) auf der Innenseite mit mehreren Schlitzen (20 a-d) versehen ist, die eine entsprechende Anzahl bewegbarer Erhebungen (66), die innenseitig von dem ringförmigen Hebel (46) vorstehen, in einer Steckverbindung aufnehmen und in Eingriff halten.

3. Steckbare Befestigungsvorrichtung nach Anspruch 2, dadurch gekennzeichnet, daß die mehreren Schlitzen (20 a-d) und Erhebungen (66) aus zwei Schlitzen und zwei Erhebungen bestehen.

4. Steckbare Befestigungsvorrichtung nach Anspruch 2, dadurch gekennzeichnet, daß die mehreren Schlitze (20 a-d) und Erhebungen (66) aus drei Schlitzen und drei Erhebungen bestehen.

5. Steckbare Befestigungsvorrichtung nach Anspruch 2, dadurch gekennzeichnet, daß die mehreren Schlitze (20 a-d) und Erhebungen (66) aus vier Schlitzen und vier Erhebungen bestehen.

6. Steckbare Befestigungsvorrichtung nach Anspruch 1, dadurch gekennzeichnet, daß die mehreren, in den Nuten (20a-d) in Eingriff bringbaren Erhebungen (66) als innenseitig in den hohlen Kanal (48) vorstehend ausgeführt sind und, wenn der Schaft (14) durch den Hebel (46) in den Flansch (49) eingeführt ist, in Übereinstimmung gebracht und um eine Achse des Schaftes (14) drehbar sind, wobei der Hebel (46) in einer ersten Position durch Federmittel (58) angeordnet wird und in einer zweiten Position durch manuellen Eingriff mit Hilfe eines Werkzeuges, wie beispielsweise eines Schraubendrehers, angeordnet werden kann.

7. Einsteckbare Befestigungsvorrichtung nach Anspruch 6, dadurch gekennzeichnet, daß der den Hebel (46) aufnehmende Flansch (40) mit einem hohlen Durchgang (50) versehen ist, der mit dem Durchgang (48) durch den Hebel (46) übereinstimmt, intern mit so vielen Erhebungen (68), wie Erhebungen (66) vorgesehen sind, versehen ist, die in den Kanal (48) des Hebels (46) vorstehen und in die entsprechenden Schlitze (20 a-d) in dem Schaft (14) eingesetzt werden können, um als eine Führung des Flansches (40) in Bezug auf den Schaft (14) zu arbeiten.

8. Einsteckbare Befestigungsvorrichtung nach Anspruch 7, dadurch gekennzeichnet, daß die Erhebungen (66), die von dem Kanal (48) des Hebels (46) vorstehen, in der Position nicht mit den Erhebungen (68) übereinstimmen, die von dem Durchgang (50) des Flansches (40) vorstehen, unter der Wirkung der abgeschrägten Erhebungen (22 a-d), die in den Schlitzen (20 a-d) in dem Schaft (14) der Betätigungseinrichtung vorhanden sind, in Übereinstimmung kommen, und in die nicht übereinstimmende Ausgangsposition zurückkommen, wenn sie, nachdem die abgeschrägten Erhebungen (22 a-d) überwunden sind, in die nachfolgenden Aussparungen (24 a-d) eintreten.

9. Steckbare Befestigungsvorrichtung nach Anspruch 8, dadurch gekennzeichnet, daß die Sitze aus Schlitzen (70a-f) bestehen, die auf dem Umfang um den Flansch (40) herum angeordnet und an dem Boden mit wenigstens einem Zahn (74) versehen sind, der mit Rippen (76, 78) in Eingriff bringbar ist, die seitlich von den Teilen vorstehen, die die Steuer- und/oder Signaleinheiten (80) enthalten.

10. Steckbare Befestigungsvorrichtung nach Anspruch 9, dadurch gekennzeichnet, daß die Umfangsschlitze (70 a-f) des Flansches (40) drei Paare sind, die höchstens drei Teile der Steuer- und/oder Signaleinheiten (80) aufnehmen.

## Revendications

1. Dispositif de fixation enfiché avec un blocage à fixation immédiate qui consiste en un élément de manoeuvre (10) qui peut être être introduit depuis le côté antérieur exterieur d'un tableau (32) mais qui peut être fixé sur le côté arrière à l'aide d'un moyen tel que, par exemple, un écrou fileté à oeillet (38) vissé sur une tige creuse filetée (14) qui dépasse de l'élément de manoeuvre (10) sur l'intérieur du tableau (32), ladite tige (14) étant pourvue sur le côté intérieur d'au moins une fente longitudinale (20), avec une saillie en biseau (22), suivie d'un évidement (24) sensiblement perpendiculaire, apte à recevoir et retenir en prise au moins une partie en relief (66) qui dépasse d'un trou central ou passage creux (48) d'un levier (46) en forme de bague logé dans un rebord (40),
caractérisé en ce que ledit levier (46) en forme de bague peut être déplacé de manière élastique autour de l'axe longitudinal de la tige (14), ladite partie en relief (66) au nombre d'au moins une pouvant être dégagée par rotation dudit levier (46) en forme de bague grâce à une intervention volontaire sur celui-ci et ledit rebord (40) étant muni, en un emplacement opposé à celui d'insertion de ladite tige (14), d'appuis (70a-f) destinés à recevoir un ou plusieurs dispositifs (80) de commande et/ou signalisation à adaptation rapide (insérables par déclic).

2. Dispositif de fixation enfiché selon la revendication 1, caractérisé en ce que ladite tige (14) est munie sur le côté intérieur d'une pluralité de fentes (20a-d) recevant par enfichage et retenant en prise une pluralité correspondante de parties mobiles en relief (66) qui font saillie du levier en forme de bague (46) vers l'intérieur.

3. Dispositif de fixation enfiché selon la revendication 2, caractérisé en ce que ladite pluralité de fentes (20a-d) et de parties en relief (66) consiste en deux fentes et deux parties en relief.

4. Dispositif de fixation enfiché selon la revendication 2, caractérisé en ce que ladite pluralité de fentes (20a-d) et de parties en relief (66) consiste en trois fentes et trois parties en relief.

5. Dispositif de fixation enfiché selon la revendication 2, caractérisé en ce que ladite pluralité de fentes (20a-d) et de parties en relief (66) consiste en quatre fentes et quatre parties en relief.

6. Dispositif de fixation enfiché selon la revendication 1, caractérisé en ce que lesdites parties en relief (66) de la pluralité, qui peuvent se mettre en prise avec lesdites fentes (20a-d), sont réalisées sous forme de parties en saillie dans le passage creux (48), ayant la forme de ladite tige (14), dans le levier (46) que contient ledit rebord (40) et qui peut tourner autour de l'axe de ladite tige (14), ledit levier (46) étant placé dans une première position par des moyens élastiques (58) et pouvant être placé à volonté en une seconde position grâce à une intervention manuelle au moyen d'un outil comme un tourne-vis.

7. Dispositif de fixation enfiché selon la revendication 6, caractérisé en ce que le rebord (40) qui loge ledit levier (46) est munie d'un passage creux (50), ayant la forme du passage (48) dans le levier (46), et munie intérieurement de parties en relief (68), en aussi grand nombre que les parties en relief (66), qui dépassent dans ledit passage (48) du levier (46) et sont aptes à être introduites dans les fentes correspondantes (20a-d) de la tige (14) pour servir de guide au rebord (40) par rapport à ladite tige (14).

8. Dispositif de fixation enfiché selon la revendication 7, caractérisé en ce que la position des parties en relief (66) qui dépassent du passage (48) du levier (46) ne coïncide pas avec la position des parties en relief (68) qui dépassent du passage (50) du rebord (40), ces parties venant en coïncidence sous l'effet de saillies biseautées (22a-d) présentes dans lesdites fentes (20a-d) de ladite tige (14) de l'élément de manoeuvre et revenant dans la position initiale de non-coïncidence quand elles pénètrent dans les évidements contigus (24a-d) après avoir dépassé lesdites saillies biseautées (22a-d).

9. Dispositif de fixation enfiché selon la revendication 8, caractérisé en ce que lesdits appuis sont des fentes (70a-f) disposées à la périphérie dudit rebord (40) et munies sur le fond d'au moins une dent (74) apte à coopérer avec des ailettes (76, 78) qui dépassent latéralement d'éléments qui contiennent lesdits dispositifs (80) de commande et/ou signalisation.

10. Dispositif de fixation enfiché selon la revendication 9, caractérisé en ce que les fentes périphériques (70a-f) du rebord (40) sont au nombre de trois paires pour loger au moins trois éléments qui contiennent lesdits dispositifs (80) de commande et/ou signalisation.
